# EUROPEAN PATENT APPLICATION

(11) **EP 4 262 004 A1**
(43) Date of publication of application: **18.10.2023**
(21) Application number: 22871586.8
(22) Date of filing: 22.07.2022
(51) Int. Cl.: H01M 50/342, H01M 50/375, H01M 50/209

(54) **BATTERY CELL, BATTERY, AND ELECTRICAL EQUIPMENT**

(30) Priority: 27.09.2021 CN 202122354731 U
(71) Applicant: Contemporary Amperex Technology Co., Limited, Ningde, Fujian 352100 (CN)
(72) Inventor: LEI, Yuyong, Ningde, Fujian 352100 (CN); GUO, Zhijun, Ningde, Fujian 352100 (CN); WANG, Peng, Ningde, Fujian 352100 (CN); JIN, Haizu, Ningde, Fujian 352100 (CN)
(74) Representative: Laufhütte, Dieter
(86) International application number: PCT/CN2022/107427
(87) International publication number: WO 2023/045527

(57) **Abstract**

The embodiments of the present application provide a battery cell, a battery and an electrical apparatus, which belong to the technical field of batteries. The battery cell includes a pressure relief body, a pressure relief mechanism, and a protective member. The pressure relief mechanism is arranged on the pressure relief body. At least a part of the protective member is located on a side of the pressure relief mechanism away from the interior of the battery cell, and covers the pressure relief mechanism. The pressure relief mechanism has at least one opening portion configured to be opened and destruct the protective member to release the pressure when the internal pressure or temperature of the battery cell reaches a threshold value.

## Description

### Cross Reference to Related Applications

The present application claims the priority of Chinese Patent Application No. 202122354731.4 filed on September 27, 2021 and entitled "BATTERY CELL, BATTERY AND ELECTRICAL APPARATUS", the entire content of which is incorporated herein by reference.

### Technical Field

The present application relates to the technical field of batteries, and in particular, to a battery cell, a battery and an electrical apparatus.

### Background Art

The battery may include nickel-cadmium batteries, nickel-hydrogen batteries, lithium-ion batteries, secondary alkaline zinc-manganese batteries, and the like. The battery includes a battery cell, the battery cell includes an electrode assembly, an electrolyte solution, and a current collecting member, and the electrode assembly includes a positive electrode sheet, a negative electrode sheet, and a separator between the positive electrode sheet and the negative electrode sheet.

In order to improve the safety performance of the battery, the existing battery cells also include a pressure relief mechanism, which is activated to release the internal pressure when the internal pressure or temperature of the battery cell reaches a predetermined threshold. However, sometimes above the pressure relief mechanism, there will be other members that may prevent the pressure relief mechanism from opening timely when the internal pressure or temperature of the battery cell reaches a threshold, causing safety problems.

Therefore, how to improve the safety of the battery is an urgent problem to be solved in the field of battery technologies.

### Summary of the Invention

The present application provides a battery cell, a battery, and an electrical apparatus, aiming at improving the safety performance of the battery.

In a first aspect, the embodiments of the present application provide a battery cell, which includes a pressure relief body, a pressure relief mechanism and a protective member. The pressure relief mechanism is arranged on the pressure relief body. At least a part of the protective member is located on a side of the pressure relief mechanism away from the interior of the battery cell, and covers the pressure relief mechanism. The pressure relief mechanism has at least one opening portion configured to be opened and destruct the protective member to release the pressure when the internal pressure or temperature of the battery cell reaches a threshold value.

In the above solution, the protective member is provided on the side of the pressure relief mechanism away from the inside of the battery cell, which reduces the possibility of the pressure relief mechanism being destructed and affecting the performance of the pressure relief mechanism. The opening portion is opened when the internal pressure or temperature of the battery cell reaches a threshold value, and destructs the protective member to release the pressure, which can reduce the risk that the pressure relief mechanism cannot be opened timely due to the obstruction by the protective member, and improve the safety performance of the battery cell.

In some embodiments, the pressure relief mechanism has a first pressure relief groove, the pressure relief mechanism is configured to break along the first pressure relief groove when the pressure or temperature reaches a threshold, at least one puncturing portion is formed on the opening portion, and the puncturing portion is used to puncture the protective member to release pressure.

In the above solution, the pressure relief mechanism has the first pressure relief groove, and the area of the first pressure relief groove is weaker than the area where the opening portion of the pressure relief mechanism is located. When the internal pressure or temperature of the battery cell reaches a threshold value, the first pressure relief groove is broken first, which improves the controllability of the pressure relief mechanism. The opening portion can be opened outwards and form a puncturing portion, which increases the possibility of timely destruction of the protective member.

In some embodiments, the puncturing portion has a sharp corner at right angle or acute angle.

In the above solution, the puncturing portion has a sharp corner at right angle or acute angle, which makes the puncturing portion sharper and further increases the possibility of the protective member being destructed timely, thereby further increasing the possibility of the pressure relief mechanism to be opened and release the pressure timely when the internal pressure or temperature of the battery cell reaches a threshold value, making the battery cell safer.

In some embodiments, the first pressure relief groove is sawtooth-shaped, and the edge of the opening portion is formed with a plurality of puncturing portions after the pressure relief mechanism breaks along the first pressure relief groove.

In the above solution, the pressure relief mechanism breaks along the sawtooth-shaped first pressure relief groove to form a plurality of puncturing portions, the sawtooth shape can make more puncturing portions formed in the opening portion, and more puncturing portions jointly puncture the protective member, further reducing the obstruction by the protective member to the opening of the pressure relief mechanism.

In some embodiments, the pressure relief mechanism further includes two second pressure relief grooves arranged at intervals along the extension direction of the first pressure relief groove, and the two second pressure relief grooves both intersect with the first pressure relief groove. The first pressure relief groove and the two second pressure relief grooves jointly define the opening portion. The opening portion is configured to be opened along the first pressure relief groove and the two second pressure relief grooves to release the pressure when the pressure or temperature inside the battery cell reaches a threshold value.

In the above solution, the two second pressure relief grooves are arranged at intervals along the extension direction of the first pressure relief groove, and intersect with the first pressure relief groove, so that when the internal pressure needs to be released, the pressure relief mechanism will break along the first pressure relief groove and the second pressure relief groove, and the opening portion can be opened to a greater extent, releasing the internal pressure of the battery cell faster.

In some embodiments, the first pressure relief groove and the two second pressure relief groove jointly define two opening portions. The two opening portions are divided by the first pressure relief groove and symmetrically distributed on both sides of the first pressure relief groove.

In the above solution, the pressure relief mechanism breaks along the first pressure relief groove and the second pressure relief groove, forming two opening portions symmetrically distributed on both sides of the first pressure relief groove, so that the pressure relief mechanism has two rows of puncturing portions. The two rows of puncturing portions reach similar or identical puncturing heights and jointly puncture the protective member, thereby increasing the possibility of the puncturing portions successfully puncturing the protective member.

In some embodiments, there are a plurality of first pressure relief grooves, any two first pressure relief grooves in the plurality of first pressure relief grooves intersect at an opening position, and the plurality of first pressure relief grooves jointly define a plurality of opening portions. The opening portion is configured to be opened from the opening position along the first pressure relief groove to release the pressure when the pressure or temperature inside the battery cell reaches a threshold value.

In the above solution, the pressure relief mechanism is provided with a plurality of first pressure relief grooves, and the plurality of first pressure relief grooves intersect at the opening position and define a plurality of opening portions. After the opening portions are opened along the first pressure relief grooves, the plurality of opening portions are opened outwards and destruct the protective member in different directions, thereby improving the destructive ability of the opening portion to the protective member and reducing the risk that the pressure relief mechanism cannot be opened timely due to the obstruction by the protective member.

In some embodiments, after the opening portion is opened along the first pressure relief groove, a puncturing portion is formed at the end of the opening portion.

In the above solution, a puncturing portion is formed at the end of the opening portion, and the puncturing portion being located at the end is beneficial for the puncturing portion to first contact and puncture the protective member, increasing the possibility of destructing the protective member.

In some embodiments, the opening portion is located in the central area of the pressure relief mechanism.

In the above solution, the opening portion is located in the central area of the pressure relief mechanism, so that as many opening portions as possible can reach the height of puncturing the protective member, increasing the destructive force of the opening portions on the protective member.

In some embodiments, the pressure relief mechanism has a connecting portion, which is arranged around the periphery of the opening portion and used for connecting the pressure relief body and the opening portion, and the thickness of the connecting portion is greater than that of the opening portion.

In the above solution, the connecting portion connects the pressure relief body and the opening portion to realize the assembly of the pressure relief mechanism and the pressure relief body. The thickness of the connecting portion is greater than that of the opening portion, which improves the connection strength between the pressure relief mechanism and the pressure relief body and reduces the risk of the pressure mechanism detaching from the pressure relief body during the pressure relief process.

In some embodiments, there is a gap between the protective member and the opening portion in the thickness direction of the pressure relief mechanism.

In the above solution, there is a gap between the protective member and the opening portion, leaving a space for the opening portion, which improves the possibility of successfully destructing the protective member, thereby increasing the possibility of the internal pressure of the battery cell being released smoothly.

In a second aspect, the embodiments of the present application provide a battery, including: a box body and a battery cell provided by any one of the embodiments of the above first aspect. The box body is used for accommodating the battery cell.

In a third aspect, the embodiments of the present application provide an electrical apparatus, including a battery provided by any one of the embodiments of the second aspect. The battery is used for providing electric energy.

The embodiments of the invention provide a battery cell, a battery and electrical apparatus, wherein the battery cell includes a pressure relief body, a pressure relief mechanism and a protective member. The pressure relief mechanism is arranged on the pressure relief body. At least a part of the protective member is located on a side of the pressure relief mechanism away from the interior of the battery cell, and covers the pressure relief mechanism. The pressure relief mechanism has at least one opening portion. When the internal pressure or temperature of the battery cell reaches a threshold value, the opening portion is opened and destructs the protective member to release the pressure, thereby reducing the risk that the pressure relief mechanism cannot be opened smoothly due to the obstruction by the protective member, improving the safety performance of the battery cell.

### Description of Drawings

In order to illustrate the technical solutions of the embodiments of the present application more clearly, the following briefly introduces the drawings required in the embodiments of the present application. Obviously, the drawings described below are only some embodiments of the present application. For those of ordinary skill in the art, other drawings can also be obtained according to the drawings without any creative effort.
Fig. 1 is a schematic structural diagram of a vehicle disclosed in some embodiments of the present application;
Fig. 2 is a schematic structural diagram of a battery disclosed in some embodiments of the present application;
Fig. 3 is a schematic structural diagram of a battery module disclosed in some embodiments of the present application;
Fig. 4 is an exploded view of a battery cell disclosed in some embodiments of the present application;
Fig. 5 is a cross-sectional view along A-A direction of a battery cell disclosed in some embodiments of the present application;
Fig. 6 is a schematic structural diagram of a pressure relief mechanism disclosed in some embodiments of the present application;
Fig. 7 is a schematic structural diagram of a pressure relief mechanism disclosed in some other embodiments of the present application;
Fig. 8 is a schematic structural diagram of a pressure relief mechanism disclosed in still other embodiments of the present application; and
Fig. 9 is a partial enlarged view of B in the cross-sectional view shown in Fig. 5.

In the drawings, the drawings are not drawn to actual scale.

Description of reference numerals: 10 - box body; 11 - first portion; 12 - second portion; 13 - accommodating cavity; 20 - battery module; 30 - battery cell; 40 - pressure relief body; 50 - pressure relief mechanism; 501 - opening portion; 5011 - puncturing portion; 5011a - sharp corner; 502 - first pressure relief groove; 503 - second pressure relief groove; 504 - opening position; 505 - connecting portion; 60 - protective member; 70 - gap; 100 - battery; 1000 - vehicle.

### Detailed Description

To make the objective, technical solutions and advantages of the embodiments of the present application more clear, the technical solutions in the embodiments of the present application will be clearly described below with reference to the drawings in the embodiments of the present application. Obviously, the embodiments described are some of rather than all of the embodiments of the present application. Based on the embodiments in the present application, all other embodiments obtained by those of ordinary skill in the art without creative effort fall within the protection scope of the present application.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "including" and "having" and any variations thereof in the specification and the claims of the present application as well as the foregoing description of the drawings are intended to cover non-exclusive inclusions. The terms "first", "second" and the like in the description and claims of the present application or the above drawings are used to distinguish different objects, rather than to describe a specific sequence or primary-subordinate relationship.

Reference in the present application to "embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments.

In the description of the present application, it should be noted that the terms "mounting", "connecting", "connection" and "attachment" should be understood in a broad sense, unless otherwise explicitly specified or defined. For example, it may be a fixed connection, a detachable connection, or an integrated connection; and it may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is only an association relationship for describing associated objects, indicating that three relationships may exist. For example, A and/or B may represent three situations: A exists alone, both A and B exist, and B exists alone. In addition, the character "/" in the present application generally means that the associated objects before and after it are in an "or" relationship.

In the embodiments of the present application, the same reference numerals denote the same components, and for the sake of brevity, detailed descriptions of the same components are omitted in different embodiments. It should be understood that the thickness, length, width and other dimensions of the various components in the embodiments of the application shown in the drawings, as well as the overall thickness, length and width and other dimensions of the integrated device, are for illustrative purposes only, and should not constitute any limitation to the present application.

"A plurality of' in the present application refers to two or more (including two).

In the present application, the battery cell may comprise a lithium-ion secondary battery, a lithium-ion primary battery, a lithium-sulfur battery, a sodium-lithium-ion battery, a sodium-ion battery, a magnesium-ion battery, and the like, without limitation in the embodiments of the present application. The battery cell may be cylindrical, flat, rectangular, or in other shapes, which is also not limited in the embodiments of the present application. The battery cells are generally divided into three types according to packaging manners: cylindrical battery cells, rectangular battery cells, and pouch cells, which are not limited in the embodiments of the present application.

The battery mentioned in the embodiments of the present application refers to a single physical module including one or more battery cells to provide a higher voltage and capacity. For example, the battery mentioned in the present application may include a battery module, a battery pack, and the like. The battery generally includes a box body for encapsulating one or more battery cells. The box body can prevent liquids or other foreign matters from affecting the charging or discharging of the battery cells.

The battery cell includes an electrode assembly and an electrolyte solution, the electrode assembly being composed of a positive electrode sheet, a negative electrode sheet and a separator. The battery cell operates mainly relying on movement of metal ions between the positive electrode sheet and the negative electrode sheet. The positive electrode sheet includes a positive electrode current collector and a positive electrode active material layer, wherein the positive electrode active material layer is coated on a surface of the positive electrode current collector, the part of the positive electrode current collector not coated with the positive electrode active material layer protrudes from the part of the positive electrode current collector already coated with the positive electrode active material layer, and the part of the positive electrode current collector not coated with the positive electrode active material layer serves as a positive electrode tab. Taking a lithium-ion battery as an example, the material of the positive current collector may be aluminum, and the positive active material may be lithium cobalt oxide, lithium iron phosphate, ternary lithium, lithium manganate, and the like. The negative electrode sheet includes a negative electrode current collector and a negative electrode active material layer. A surface of the negative electrode current collector is coated with the negative electrode active material layer. Negative electrode current collectors not coated with the negative electrode active material layer protrude from the negative electrode current collector coated with the negative electrode active material layer. The negative electrode current collectors not coated with the negative electrode active material layer serve as negative electrode tabs. The material of the negative electrode current collector may be copper, and the negative electrode active material may be carbon, silicon, and the like. In order to ensure that no fusing occurs when a large current passes, there are a plurality of positive electrode tabs which are stacked together, and there are a plurality of negative electrode tabs which are stacked together. The separator may be made from polypropylene (PP), polyethylene (PE), and the like. In addition, the electrode assembly may be of a wound structure or a laminated structure, which is not limited in the embodiments of the present application.

Many design factors, such as energy density, cycle life, discharge capacity, charge-discharge rate and other performance parameters, should be considered in the development of the battery technology. In addition, the safety of the battery also needs to be taken into account.

For battery cells, the main safety hazard comes from the charging and discharging process. At the same time, a suitable ambient temperature design is required. In order to effectively avoid unnecessary losses, there are generally three protection measures for battery cells. Specifically, the protection measures at least include the selection of appropriate separator materials and pressure relief mechanisms for switching elements. The switching element refers to an element that can stop charging or discharging the battery when the temperature or resistance inside the battery cell reaches a certain threshold. The separator is used to isolate the positive electrode sheet and the negative electrode sheet. When the temperature rises to a certain value, it can automatically dissolve the micron-scale (or even nano-scale) pores attached to it, so that metal ions cannot pass through the separator, thereby terminating the internal reaction of the battery cell.

The pressure relief mechanism refers to an element or component that is actuated to relieve the internal pressure or temperature when the internal pressure or temperature of the battery cell reaches a predetermined threshold. The design of the threshold varies according to different design requirements. The threshold may depend on the material of one or more of the positive electrode sheet, the negative electrode sheet, the electrolyte solution, and the separator in the battery cell. The pressure relief mechanism may take the form of an explosion-proof valve, an explosion-proof sheet, a gas valve, a pressure relief valve or a safety valve, etc., and may specifically adopt a pressure-sensitive or temperature-sensitive element or structure. That is, when the internal pressure or temperature of the battery cell reaches a predetermined threshold, the pressure relief mechanism performs an action or a weak structure provided in the pressure relief mechanism is destructed, so as to form an opening or channel for releasing the internal pressure or temperature.

The "actuate" mentioned in the present application means that the pressure relief mechanism is actuated or activated to a certain state, so that the internal pressure and temperature of the battery cell can be relieved. Actions produced by the pressure relief mechanism may include, but are not limited to, at least a part of the pressure relief mechanism being broken, crushed, torn or opened, and the like. When the pressure relief mechanism is actuated, high temperature and high pressure substances inside the battery cell may be discharged outward from the actuated part as emissions. In this way, the pressure and temperature of the battery cell can be relieved under controllable pressure or temperature, so as to prevent potential more serious accidents.

The emissions from the battery cell mentioned in the present application include, but are not limited to, the electrolyte solution, dissolved or split positive and negative electrode sheets, fragments of the separator, high temperature and high pressure gas generated by reaction, flames, and the like.

A pressure relief mechanism in the battery cell has an important impact on the safety of the battery. For example, when a short circuit, overcharge, and the like occurs, it may cause thermal runaway inside the battery cell, resulting in a sudden rise in the pressure or temperature. In this case, the internal pressure of the battery cell can be relieved or the temperature of the battery cell can be lowered through the actuation of the pressure relief mechanism to prevent explosion and fire of the battery cell.

The inventors found that, in the battery cell, for the purpose of insulation protection or protection of the pressure relief mechanism, sometimes a protective member is provided above the pressure relief mechanism. However, the protective member may prevent the pressure relief mechanism from opening timely when the internal pressure or temperature of the battery cell reaches a threshold, which may cause safety problems.

In view of this, the embodiments of the present application provide a technical solution, a battery cell including a pressure relief body, a pressure relief mechanism and a protective member. The pressure relief mechanism is arranged on the pressure relief body. At least a part of the protective member is located on a side of the pressure relief mechanism away from the interior of the battery cell, and covers the pressure relief mechanism. The pressure relief mechanism has at least one opening portion. When the internal pressure or temperature of the battery cell reaches a threshold value, the opening portion is opened and destructs the protective member to release the pressure, thereby reducing the possibility that the pressure relief mechanism cannot be opened timely due to the obstruction by the protective member, improving the safety performance of the battery cell.

The technical solutions described in the embodiments of the present application are suitable for batteries, and electrical apparatus using batteries.

The electrical apparatus may be, but not limited to, a vehicle, a mobile phone, a portable device, a laptop computer, a ship, a spacecraft, an electric toy, an electric tool, and the like. The vehicle may be a fuel vehicle, a gas vehicle or a new energy vehicle. The new energy vehicle may be an all-electric vehicle, a hybrid electric vehicle, an extended-range electric vehicle, and the like. The spacecraft includes airplanes, rockets, space shuttles, spaceships, and the like. The electric toy includes fixed or mobile electric toys, such as game consoles, electric car toys, electric ship toys and electric aircraft toys. The electric tool includes metal cutting electric tools, grinding electric tools, assembly electric tools and railway electric tools, such as electric drills, electric grinders, electric wrenches, electric screwdrivers, electric hammers, impact drills, concrete vibrators and electric planers. The embodiments of the present application do not impose special limitations on the above electrical apparatus.

For convenience of description in the following embodiments, the electrical apparatus being a vehicle is taken as an example for description.

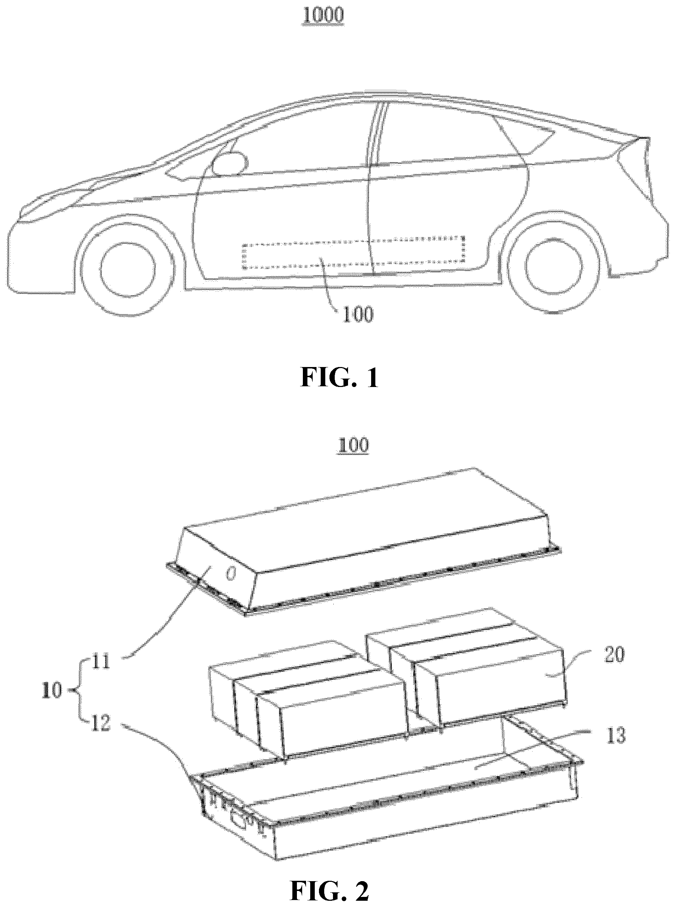

Reference is made to Fig. 1, which is a schematic structural diagram of a vehicle 1000 disclosed in some embodiments of the present application. The interior of the vehicle 1000 is provided with a battery 100, and the battery 100 may be provided at the bottom or head or tail of the vehicle 1000. The battery 100 may be used to power the vehicle 1000. For example, the battery 100 may be used as an operating power source of the vehicle 1000.

In some embodiments of the present application, the battery 100 not only may serve as an operating power source of the vehicle 1000, but also may serve as a driving power source of the vehicle 1000, thus replacing or partially replacing fuel or natural gas to provide driving power for the vehicle 1000.

In some embodiments, reference is made to Fig. 2, which is a schematic structural diagram of a battery 100 disclosed in some embodiments of the present application, where the battery 100 includes a box body 10 and a battery module 20, and the box body 10 is used for accommodating the battery module 20.

The box body 10 may include a first portion 11 and a second portion 12, the first portion 11 and the second portion 12 being covered to each other to define an accommodating cavity 13 for accommodating the battery cell 30. The first portion 11 and the second portion 12 may be of a variety of shapes, such as a cuboid, a cylinder, and the like. The first portion 11 may be a hollow structure with one side open, the second portion 12 may also be a hollow structure with one side open, and the opening side of the second portion 12 covers the opening side of the first portion 11, so as to form a box body 10 with an accommodating cavity 13. Alternatively, as shown in Fig. 2, the first portion 11 may be a hollow structure with one side open, the second portion 12 may be a plate-like structure, and the second portion 12 covers the opening side of the first portion 11 to form a box body 10 with an accommodating cavity 13. Exemplarily, in Fig. 2, both the first portion 11 and the second portion 12 are cuboid structures.

The first portion 11 and the second portion 12 may be sealed by a sealing member, which may be a sealing ring, a sealant, and the like.

In the battery 100, one or more battery cells 30 may be provided. If there are a plurality of battery cells 30, the plurality of battery cells 30 can be connected in series or parallel or series-parallel connection, wherein the series-parallel connection means that the plurality of battery cells 30 are connected in both series and parallel. A plurality of battery cells 30 may be connected in series or parallel or series-parallel connection to form a battery module 20, and a plurality of battery modules 20 are connected in series or parallel or series-parallel connection to form an entirety which is accommodated in the box body 10. Alternatively, all the battery cells 30 may be directly connected in series or parallel or series-parallel connection, and then an entirety composed of the plurality of battery cells 30 may be accommodated in the box body 10.

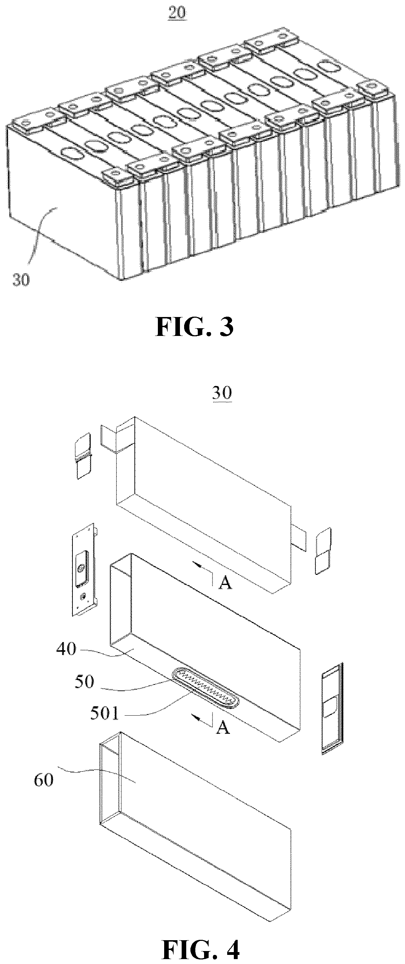

Reference is made to Fig. 3, which is a schematic structural diagram of a battery module 20 disclosed in some embodiments of the present application, wherein the battery module 20 includes a battery cell 30. One or more battery cells 30 may be provided.

Referring to Fig. 4, the present application discloses a battery cell 30. Fig. 4 is an exploded view of a battery cell 30 disclosed in some embodiments of the present application. The battery cell 30 includes a pressure relief body 40, a pressure relief mechanism 50, and a protective member 60. The pressure relief mechanism 50 is arranged on the pressure relief body 40. At least a part of the protective member 60 is located on a side of the pressure relief mechanism 50 away from the interior of the battery cells 30, and covers the pressure relief mechanism 50. The pressure relief mechanism 50 has at least one opening portion 501 configured to be opened and destruct the protective member 60 to release the pressure when the internal pressure or temperature of the battery cell 30 reaches a threshold value.

The pressure relief body 40 is the case and/or the end cover of the battery cell 30, as shown in Fig. 4, for example, the pressure relief body 40 is a case.

The pressure relief body 40 may be made of various materials, such as plastic, aluminum, steel, aluminum alloy, and the like. The pressure relief body 40 can be made of one material or be composed of a plurality of materials.

The pressure relief mechanism 50 is provided on the pressure relief body 40, and the pressure relief mechanism 50 is used to be opened when the internal pressure or temperature of the battery cell 30 reaches a predetermined threshold to release the internal pressure or temperature. The design of the threshold varies according to different design requirements.

The pressure relief mechanism 50 may take the form of an explosion-proof valve, an explosion-proof sheet, a gas valve, a pressure relief valve or a safety valve, etc., and may adopt a pressure-sensitive or temperature-sensitive element or structure. That is, when the internal pressure or temperature of the battery cell 30 reaches a predetermined threshold, a weak structure provided in the pressure relief mechanism 50 is destructed, so as to form an opening or channel for reducing the internal pressure or temperature.

The number of pressure relief mechanisms 50 may be one or more. When the number of the pressure relief mechanism 50 is one, the pressure relief mechanism 50 may be located on the end cover or the case of the battery cell 30. When there are a plurality of pressure relief mechanisms 50, the plurality of pressure relief mechanisms 50 may be all located on the case or all on the end cover, or some of the plurality of pressure relief mechanisms 50 may be located on the case and some on the end cover. The specific quantity and location are determined according to the design requirements. Exemplarily, as shown in Fig. 1 and Fig. 4, when there is one pressure relief mechanism 50 and the end covers of the battery cells 30 are located on both sides, in order to make the direction of pressure relief away from the user of the vehicle 1000 and improve the safety performance of the vehicle 1000, the pressure relief mechanism 50 is arranged on the lower side wall of the case of the battery cell 30.

The pressure relief mechanism 50 and the pressure relief body 40 can be fixed in various ways, such as welding, snap fit, bonding or integral molding.

The pressure relief mechanism 50 can be in various shapes, such as racetrack-shaped, circular, rectangular and the like.

The protective member 60 at least partially covers the pressure relief mechanism 50. The material of the protective member 50 may be various plastics such as polyethylene or polypropylene.

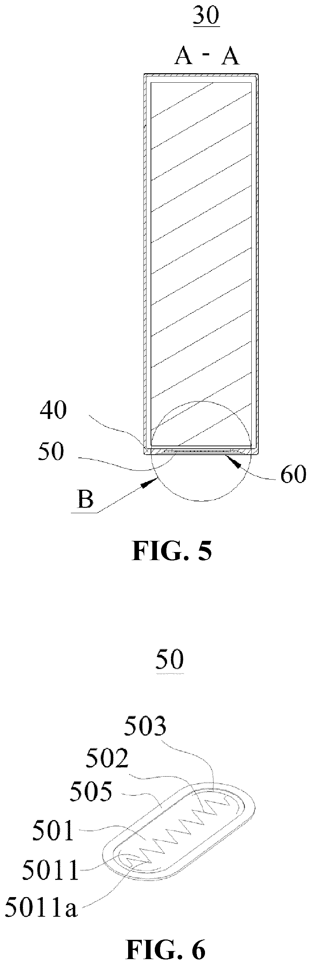

The protective member 50 can play a certain insulation protection effect, reducing the risk of a short circuit caused by contact between the pressure relief mechanism 50 and metal members such as connecting elements. In addition to covering the pressure relief mechanism 50, the protective member 50 can also cover the outer surface of the case of the battery cell 30 to provide insulation protection for the case and reduce the risk of short circuit caused by contact between the case and metal members. As shown in Fig. 5, Fig. 5 is a cross-sectional view along A-A direction of a battery cell disclosed in some embodiments of the present application. Exemplarily, the protective member 50 covers the case of the battery cell 30 and the pressure relief mechanism 50.

The protective member 60 can reduce the risk of the pressure relief mechanism 40 being scratched or stabbed by the protruding part of the outside, and reduce the impact on the normal performance of the pressure relief mechanism 40.

The protective member 60 covers the pressure relief mechanism 50, which means that in the thickness direction of the pressure relief mechanism 40, the projection of the pressure relief mechanism 50 is within the projection range of the protective member 60, and the protective member 60 can be completely fit to the surface of the pressure relief mechanism 50, or have a certain distance from the pressure relief mechanism 50.

The opening portion 501 refers to the portion where the pressure relief mechanism 50 deforms and is opened when the internal pressure or temperature of the battery cell 30 reaches a threshold value.

The destruction of the protective member 60 by the opening portion 501 may be to form a puncturing point on the protective member 60, or to tear the protective member 60, and the present application does not limit the degree of destruction of the protective member 60.

According to the embodiments of the present invention, the protective member 60 is provided on the side of the pressure relief mechanism 50 away from the inside of the battery cell 30, which reduces the possibility of the pressure relief mechanism 50 being destructed and affecting the performance of the pressure relief mechanism 50. The opening portion 501 is opened when the internal pressure or temperature of the battery cell 30 reaches a threshold value, and destructs the protective member 60 to release the pressure, which can reduce the risk that the pressure relief mechanism 50 cannot be opened timely due to the obstruction by the protective member 60, and improve the safety performance of the battery cell 30.

Referring to Fig. 5 and Fig. 6, Fig. 6 is a schematic structural diagram of a pressure relief mechanism 50 disclosed in some embodiments of the present application. In some embodiments, the pressure relief mechanism 50 has a first pressure relief groove 502, the pressure relief mechanism 50 is configured to break along the first pressure relief groove 502 when the pressure or temperature reaches a threshold, at least one puncturing portion 5011 is formed on the opening portion 501, and the puncturing portion 5011 is used to puncture the protective member 60 to release pressure.

The first pressure relief groove 502 is weaker than the opening portion 501, and its depth does not exceed the thickness of the opening portion 501.

The first pressure relief groove 502 can be obtained by stamping and the like means.

The first pressure relief groove 502 can extend from one end to the opposite end in any direction of the pressure relief mechanism 50, and the number of the first pressure relief groove 502 can be one or more.

The cross-sectional shape of the first pressure relief groove 502 may be trapezoidal, triangular, semicircular, and the like shape.

The puncturing portion 5011 is a portion where the opening portion 501 can break the protective member 50.

The end of the puncturing portion 5011 can be relatively sharp, and its number can be one or more.

According to the embodiments of the present application, the pressure relief mechanism 50 has the first pressure relief groove 502, and the area of the first pressure relief groove 502 is weaker than the area where the opening portion 501 of the pressure relief mechanism 50 is located. When the internal pressure or temperature of the battery cell 30 reaches a threshold value, the first pressure relief groove 502 is broken first, which improves the controllability of the pressure relief mechanism 50. The opening portion 501 can be opened outwards to form a puncturing portion 5011, and the puncturing portion 5011 increases the possibility of timely destruction of the protective member 60.

Referring to Fig. 5 and Fig. 6, in some embodiments, the puncturing portion 5011 has a sharp corner 5011a, and the sharp corner 5011a is at right angle or acute angle.

The sharp corner 5011a may be located at the end of the puncturing portion 5011. The puncturing portion 5011 may have one or more sharp corners 5011a.

According to the embodiments of the present invention, the puncturing portion 5011 has a sharp corner 5011a at right angle or acute angle, which makes the puncturing portion 5011 sharper and further increases the possibility of the protective member 60 being destructed timely, thereby further increasing the possibility of the pressure relief mechanism 50 to be opened and release the pressure timely when the internal pressure or temperature of the battery cell 30 reaches a threshold value, making the battery cell 30 safer.

Referring Fig. 5 and Fig. 6, in some embodiments, the first pressure relief groove 502 is sawtooth-shaped, and the edge of the opening portion 501 is formed with a plurality of puncturing portions 5011 after the pressure relief mechanism 50 breaks along the first pressure relief groove 502.

The sawtooth-shape is formed by extending the first pressure relief groove 502 in the form of a broken line on the pressure relief mechanism 50 according to a certain length and angle.

The sawtooth-shape may be continuous, thereby forming a plurality of continuous puncturing portions 5011, and the puncturing portions 5011 may have sharp corners.

According to the embodiments of the present invention, the pressure relief mechanism 50 breaks along the sawtooth-shaped first pressure relief groove 502 to form a plurality of puncturing portions 5011, the sawtooth shape can make more puncturing portions 5011 formed in the opening portion 501, and more puncturing portions 5011 jointly puncture the protective member 60, further reducing the obstruction by the protective member 60 to the opening of the pressure relief mechanism 50.

Referring to Fig. 6, in some embodiments, the pressure relief mechanism 50 further includes two second pressure relief grooves 503 arranged at intervals along the extension direction of the first pressure relief groove 502, and the two second pressure relief grooves 503 both intersect with the first pressure relief groove 502. The first pressure relief groove 502 and the two second pressure relief grooves 503 jointly define the opening portion 501. The opening portion 501 is configured to be opened along the first pressure relief groove 502 and the two second pressure relief grooves 503 to release the pressure when the pressure or temperature inside the battery cell 30 reaches a threshold value.

Preferably, the two second pressure relief grooves 503 are arranged near the edge, which makes the opening portion 501 have a larger area, so that the pressure relief mechanism 50 has a larger opening when it is opened, and the pressure relief speed is increased.

The second pressure relief groove 503 is weaker than the opening portion 501, and its depth is smaller than the thickness of the opening portion 501.

The second pressure relief groove 503 can be obtained by stamping and the like means.

The two second pressure relief grooves 503 only have one intersection point at most, so that the two second pressure relief grooves 503 will not form a seal, reducing the risk of the opening portion 501 flying out from the pressure relief mechanism.

The opening portion 501 is defined by the first pressure relief groove 502 and the second pressure relief groove 503. When the internal pressure or temperature of the battery cell 30 reaches a threshold value, the opening portion 501 is opened along the first pressure relief groove 502 and the second pressure relief groove 503.

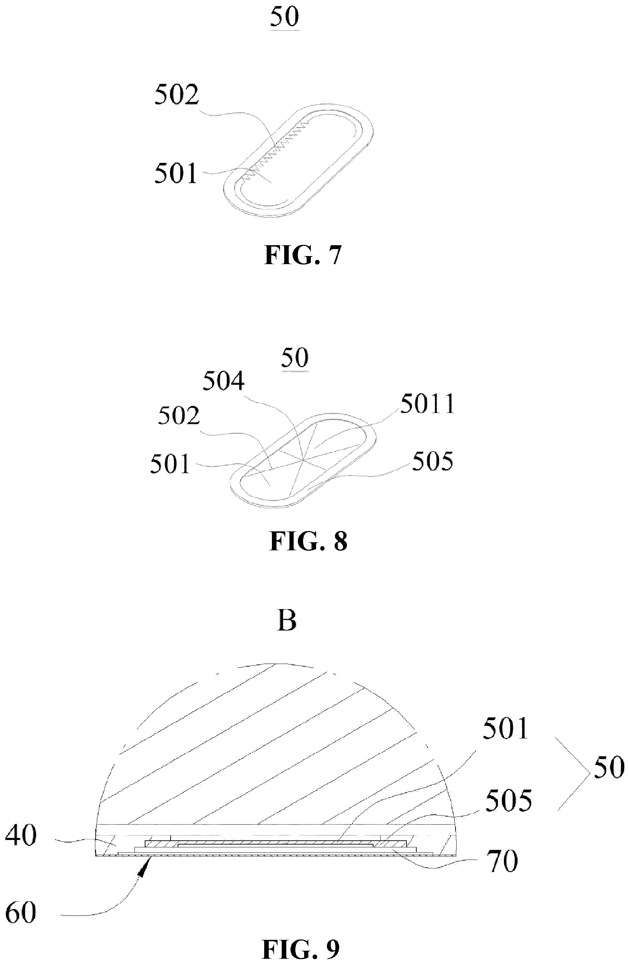

The number of opening portions 501 may be one or more. As shown in Fig. 6, for example, the first pressure relief groove is located in the middle of the pressure relief mechanism 50, thus defining two opening portions 501. As shown in Fig. 7, which is a schematic structural diagram of a pressure relief mechanism 50 disclosed in some other embodiments of the present application, the first pressure relief groove 502 is located at the edge of the pressure relief mechanism 50, and defines one opening portion 501. When the first pressure relief groove 502 is designed in other shapes, different numbers of opening portions 501 will be obtained according to the shape to meet different requirements.

According to the embodiments of the present application, the two second pressure relief grooves 503 are arranged at intervals along the extension direction of the first pressure relief groove 502, and intersect with the first pressure relief groove 502, so that when the internal pressure needs to be released, the pressure relief mechanism 50 will break along the first pressure relief groove 502 and the second pressure relief groove 503, and the opening portion 501 can be opened to a greater extent, releasing the pressure faster.

Referring to Fig. 6, in some embodiments, the first pressure relief groove 502 and the two second pressure relief groove 503 jointly define two opening portions 501. The two opening portions 501 are divided by the first pressure relief groove 502 and symmetrically distributed on both sides of the first pressure relief groove 502.

The symmetrical distribution means that the two opening portions 501 are substantially symmetrical by making the first pressure relief groove 502 located in the middle region of the pressure relief mechanism 50.

According to the embodiments of the present application, the pressure relief mechanism 50 breaks along the first pressure relief groove 502 and the second pressure relief groove 503, forming two opening portions 501 symmetrically distributed on both sides of the first pressure relief groove 502, so that the pressure relief mechanism 50 has two rows of puncturing portions 5011. The two rows of puncturing portions 5011 reach similar or identical puncturing heights and jointly puncture the protective member 60 (not shown in Fig. 6), thereby increasing the possibility of the puncturing portions 5011 successfully puncturing the protective member 60 (not shown in Fig. 6).

Referring to Fig. 5 and Fig. 8, Fig. 8 is a schematic structural diagram of a pressure relief mechanism 50 disclosed in still other embodiments of the present application. In still other embodiments, there are a plurality of first pressure relief grooves 502, any two first pressure relief grooves 502 in the plurality of first pressure relief grooves 502 intersect at a opening position 504, and the plurality of first pressure relief grooves 502 jointly define a plurality of opening portions 501. The opening portion 501 is configured to be opened from the opening position 504 along the first pressure relief groove 502 to release the pressure when the pressure or temperature inside the battery cell 30 reaches a threshold value.

The plurality of first pressure relief grooves 502 can be in various shapes such as straight line and sawtooth-shape. The plurality of first pressure relief grooves 502 have different extension directions, and have a common intersection point, that is, the opening position 504.

Preferably, both ends of any one of the first pressure relief grooves 502 are close to the edge, so that when the pressure relief mechanism 50 is opened, the opening is larger and the speed of pressure relief is accelerated.

According to the embodiments of the present application, the pressure relief mechanism 50 is provided with a plurality of first pressure relief grooves 502, the plurality of first pressure relief grooves 502 intersect at the opening position 504 and define a plurality of opening portions 501. After the opening portions 501 are opened along the first pressure relief grooves 502, the plurality of opening portions 501 are opened outwards and destruct the protective member 60 in different directions, thereby improving the destructive ability of the opening portion 501 to the protective member 60 and reducing the risk that the pressure relief mechanism 50 cannot be opened timely due to the obstruction by the protective member 60.

Referring to Fig. 5 and Fig. 8, in some embodiments, after the opening portion 501 is opened along the first pressure relief groove 502, a puncturing portion 5011 is formed at the end of the opening portion 501.

According to the embodiments of the present application, a puncturing portion 5011 is formed at the end of the opening portion 501, and the puncturing portion 5011 being located at the end is beneficial for the puncturing portion 5011 to first contact and puncture the protective member 60, increasing the possibility of destructing the protective member 60.

Referring to Fig. 5 and Fig. 8, in some embodiments, the opening position 504 is located in the central area of the pressure relief mechanism 50.

Preferably, the open position 504 is located at the geometric center of the pressure relief mechanism 50.

According to the embodiments of the present application, the opening portion 504 is located in the central area of the pressure relief mechanism 50, so that as many opening portions 501 as possible can reach the height of puncturing the protective member 60, increasing the destructive force of the opening portions 501 on the protective member 60.

Referring to Fig. 8 and Fig. 9, Fig. 9 is a partial enlarged view of B in the cross-sectional view shown in Fig. 5; In some embodiments, the pressure relief mechanism 50 has a connecting portion 505. The connecting portion 505 is arranged around the periphery of the opening portion 501 and used for connecting the pressure relief body 40 and the opening portion 501, and the thickness of the connecting portion 505 is greater than that of the opening portion 501.

The connecting portion 505 and the opening portion 501 are integrally formed or connected by means of welding and the like. When integrally formed, the difference in thickness between the two can be realized by stamping, cutting, etc.

The connection between the connecting portion 505 and the pressure relief body 40 can be through welding, bonding, snap fit, etc., which is not limited in the present application.

The thickness of the connecting portion 505 is greater than that of the opening portion 501, and the positional relationship between the surface of the connecting portion 505 facing inward and the surface of the opening portion 501 facing inward is not limited. For example, as shown in Fig. 9, the surface of the connecting portion 505 facing inward may be flush with the surface of the opening portion 501 facing inward.

According to the embodiments of the present application, the connecting portion 505 connects the pressure relief body 40 and the opening portion 501 to realize the assembly of the pressure relief mechanism 50 and the pressure relief body 40. The thickness of the connecting portion 505 is greater than that of the opening portion 501, which improves the connection strength between the pressure relief mechanism 50 and the pressure relief body 40 and reduces the risk of the pressure mechanism 50 detaching from the pressure relief body 40 during the pressure relief process.

Referring to Fig. 9, in some embodiments, there is a gap 70 between the protective member 60 and the opening portion 501 in the thickness direction of the pressure relief mechanism 50.

There may be a gap between the protective member 60 and the connecting portion 505. As shown in Fig. 9, for example, in order to increase the gap 70, there is also a gap between the protective member 60 and the connecting portion 505.

According to the embodiments of the present application, there is a gap 70 between the protective member 60 and the opening portion 501, so that the battery cell 30 has a space for the opening portion 501 to form a puncturing posture, which is beneficial for the opening portion 501 to destruct the protective member 60, thereby releasing the internal pressure.

The embodiments of the invention provide a battery cell 30, a battery 100 and a vehicle 1000, wherein the battery cell 30 includes a pressure relief body 40, a pressure relief mechanism 50 and a protective member 60. The pressure relief mechanism 50 is arranged on the pressure relief body 40. At least a part of the protective member 60 is located on a side of the pressure relief mechanism 50 away from the interior of the battery cells 30, and covers the pressure relief mechanism 40. The pressure relief mechanism 40 has at least one opening portion 501. When the internal pressure or temperature of the battery cell 30 reaches a threshold value, the opening portion 501 is opened and destructs the protective member 60 to release the pressure, thereby reducing the risk that the pressure relief mechanism 50 cannot be opened smoothly due to the obstruction by the protective member 60. When the opening portion 501 of the battery cell 30 is opened, a puncturing portion 5011 having a sharp corner 5011a may also be formed, and the puncturing portion 5011 is beneficial to destruct the protective member 60. The pressure relief mechanism 50 may also include a first pressure relief groove 502 and/or a second pressure relief groove 503. When the pressure relief mechanism 50 releases pressure, the opening portion 501 breaks along the first pressure relief groove 502 and/or the second pressure relief groove 503, which increases the possibility of successful opening of the pressure relief mechanism 50 and improves the safety performance of the battery cell 30.

Although the present application has been described with reference to the preferred embodiments, various improvements can be made thereto and components thereof can be replaced with equivalents without departing from the scope of the present application. In particular, the technical features mentioned in the various embodiments can be combined in any manner as long as there is no structural conflict. The present application is not limited to the specific embodiments disclosed herein, but rather includes all technical solutions falling within the scope of the claims.

## Claims

1. A battery cell, including:
a pressure relief body;
a pressure relief mechanism, arranged on the pressure relief body; and
a protective member, wherein at least a part of the protective member is located on a side of the pressure relief mechanism away from the interior of the battery cell, and covers the pressure relief mechanism;
wherein, the pressure relief mechanism has at least one opening portion configured to be opened and destruct the protective member to release the pressure when the internal pressure or temperature of the battery cell reaches a threshold value.

2. The battery cell according to claim 1, wherein the pressure relief mechanism has a first pressure relief groove, the pressure relief mechanism is configured to break along the pressure relief mechanism when the internal pressure or temperature of the battery cell reaches a threshold, at least one puncturing portion is formed on the opening portion, and the puncturing portion is used to puncture the protective member to release the pressure.

3. The battery cell according to claim 2, wherein the puncturing portion has a sharp corner at right angle or acute angle.

4. The battery cell according to claim 2 or 3, wherein the first pressure relief groove is sawtooth-shaped, and after the pressure relief mechanism breaks along the first pressure relief groove, a plurality of the puncturing portions is formed at the edge of the opening portion.

5. The battery cell according to claim 4, wherein the pressure relief mechanism further includes two second pressure relief grooves arranged at intervals along the extension direction of the first pressure relief groove, the two second pressure relief grooves both intersect with the first pressure relief groove, the first pressure relief groove and the two second pressure relief grooves jointly define the opening portion, and the opening portion is configured to be opened along the first pressure relief groove and the two second pressure relief grooves to release the pressure when the pressure or temperature inside the battery cell reaches a threshold value.

6. The battery cell according to claim 5, wherein the first pressure relief groove and the two second pressure relief groove jointly define two opening portions, and the two opening portions are divided by the first pressure relief groove and symmetrically distributed on both sides of the first pressure relief groove.

7. The battery cell according to claim 2 or 3, wherein there are a plurality of first pressure relief grooves, any two of the plurality of first pressure relief grooves intersect at an opening position, the plurality of first pressure relief grooves jointly define a plurality of opening portions, the opening portion is configured to be opened from the opening position along the first pressure relief groove to release the pressure when the pressure or temperature inside the battery cell reaches a threshold value.

8. The battery cell according to claim 7, wherein the puncturing portion is formed at an end of the opening portion after the opening portion is opened along the first pressure relief groove.

9. The battery cell according to claim 7 or 8, wherein the opening position is located in the central area of the pressure relief mechanism.

10. The battery cell according to any one of claims 1-9, wherein the pressure relief mechanism has a connecting portion, the connecting portion is arranged around the periphery of the opening portion and used for connecting the pressure relief body and the opening portion, and the thickness of the connecting portion is greater than the thickness of the opening portion.

11. The battery cell according to any one of claims 1-10, wherein there is a gap between the protective member and the opening portion in the thickness direction of the pressure relief mechanism.

12. A battery, including:
the battery cell of any one of claims 1-11; and
a box body for accommodating the battery cell.

13. An electrical apparatus, comprising the battery of claim 12, wherein the battery is used to provide electric energy.
